# EUROPÄISCHE PATENTSCHRIFT

(11) **EP 1 690 750 B1**
(45) Veröffentlichungstag und Bekanntmachung des Hinweises auf die Patenterteilung: **06.06.2012**
(21) Anmeldenummer: 06090016.4
(22) Anmeldetag: 31.01.2006
(51) Int. Cl.: B60R 21/231

(54) **Airbag für eine Insassenschutzeinrichtung und Verfahren zu dessen Herstellung**
Airbag for an occupant protection device and method for manufacturing the same
Airbag pour un dispositif de protection des occupants et procédé de fabrication celui-ci

(30) Priorität: 10.02.2005 DE 102005006634
(43) Veröffentlichungstag der Anmeldung: 16.08.2006
(73) Patentinhaber: TAKATA - PETRI AG, 63743 Aschaffenburg (DE)
(72) Erfinder: Heudorfer, Benedikt, 89278 Nersingen (DE); Sievers, Thomas, 89081 Ulm (DE)
(74) Vertreter: Baumgärtel, Gunnar

(56) Entgegenhaltungen:
- EP-A- 1 182 099
- DE-A1- 4 304 152
- DE-A1- 10 024 293
- DE-A1- 19 650 665
- DE-A1- 19 725 122
- DE-A1- 19 934 245
- DE-C1- 10 119 351
- DE-U1- 20 006 927
- FR-A- 2 115 985
- GB-A- 1 362 672
- US-A1- 2004 164 528

## Beschreibung

Die Erfindung bezieht sich auf einen Airbag für eine Insassenschutzeinrichtung zum Schutz eines Fahrzeuginsassen im Unfallfall.

Ein derartiger Airbag ist beispielsweise aus der deutschen Offentegungsschrift DE 100 24 293 A1 sowie DE 197 25 122 A1 bekannt. DE 19725122 A1 zeigt die Merkmale der Präambel des Anspruchs 1. Der vorbekannte Airbag aus DE 10024293A1 weist eine Luftsackhülle mit einer vergleichsweise hohen Gasdichtigkeit auf, so dass innerhalb der aufgeblasenen Luftsackhülle ein für eine Schutzwirkung ausreichender Gasdruck für eine Schutzzeit von wenigstens etwa 5 Sekunden aufrechterhalten bleibt. Auch im Falle eines Fahrzeugüberschlags bleibt der Fahrzeuginsasse somit ausreichend lange durch den Airbag geschützt.

Ein weiterer Airbag ist aus der Veröffentlichungsschrift zur internationalen Patentanmeldung WO 01/54953 bekannt. Dieser Airbag weist röhrenförmige Kammern auf, die sich im Wesentlichen senkrecht nach oben entfalten. Zur Stabilisierung der röhrenförmigen Kammern sind in diese zusätzliche Stabilitätselemente eingebracht, die in eine gewölbte Form gezwungen werden, wodurch sich die Stabilität der Elemente erhöht.

Die EP 1 182 099 A1 zeigt eine Fahrzeuginsassenschutzvorrichtung bei der der Seitengassack nur im Bereich eines Fahrzeugdaches befestigt ist und eine Stützkammer sich im aufgeblasenen Zustand entlang der B-Säule erstreckt.

Die GB 1 362 672 beschreibt eine Fahrzeugsicherheitseinrichtung mit mehreren parallelen Gassackkammern.

Schließlich beschreibt die DE 196 50 665 A1 eine Rückhalteinrichtung mit einem Rückhalteelement und einem Seitenairbag die entlang der Fahrzeuglängsachse bzw. - querachse hintereinander angeordnet sind.

Der Erfindung liegt die Aufgabe zugrunde, einen eine Fahrzeuginsassenschutzeinrichtung anzugeben, der einem Fahrzeuginsassen eine besonders große Schutzwirkung bietet.

Diese Aufgabe wird erfindungsgemäß durch eine Fahrzeuginsassenschutzeinrichtung mit den Merkmalen gemäß Patentanspruch 1 gelöst. Vorteilhafte Ausgestaltungen der erfindungsgemäßen Fahrzeuginsassenschutzeinrichtung sind in Unteransprüchen angegeben.

Danach ist erfindungsgemäß vorgesehen, dass ein Airbag zumindest zwei Stützkammern aufweist, die dem Airbag im aufgeblasenen Zustand mechanische Stabilität geben. Außerdem weist der Airbag mindestens eine Energieabsorptionskammer auf, die gasdurchlässiger als die Stützkammer ausgeführt ist und in einer ersten Unfallphase mehr Energie als eine Stützkammer absorbiert. Der Airbag wird als Seitenairbag, insbesondere als Kopf-Seitenairbag eingesetzt, da insbesondere bei Seitenunfällen der erläuterte Zweikammer-Aufbau einen besonders wirkungsvollen Schutz für den Fahrzeuginsassen bietet. Weiterhin wird der Airbag im Bereich der Tür des Fahrzeugs montiert. Beispielsweise kann der Airbag im Bereich der Oberkante einer Türbrüstung der Fahrzeugtür angeordnet sein, um ein Entfalten des Airbags nach oben in Richtung Fahrzeugdach zu ermöglichen. Erfindungsgemäß weist der Airbag zumindest zwei Stützkammern auf, die sich parallel zumindest im Wesentlichen parallel, säutenförmig nach oben entfalten. Dabei sind die beiden Stützkammern in Fahrzeuglängsrichtung beabstandet angeordnet und spannen eine Stützebene bzw. Stützfläche auf, die parallel zumindest im Wesentlichen parallel, zur zugeordneten Außenfläche der Fahrzeugaußenhaut verläuft.

Ein wesentlicher Vorteil des erfindungsgemäßen Airbags ist darin zu sehen, dass dieser aufgrund der hinsichtlich der Gasdichtigkeit unterschiedlich ausgeführten Airbagkammern, nämlich der relativ gasdichten Stützkammer und der im Vergleich dazu gasdurchlässigeren Energieabsorptionskammer, in allen Unfallphasen eines Unfalls den Fahrzeuginsassen zuverlässig schützt. So absorbiert die Energieabsorptionskammer aufgrund ihrer Gasdurchlässigkeit in einer ersten Unfallphase relativ viel Energie; die im Vergleich zu der Energieabsorptionskammer gasdichtere Stützkammer hält den Gasdruck deutlich länger, wodurch die Lage bzw. die Position des Airbags erhalten bleibt und die Schutzwirkung des Airbags auch im weiteren Unfallverlauf bestehen bleibt.

Der Airbag lässt sich beispielsweise bei offenen Fahrzeugen (Cabrios) vorteilhaft einsetzen. So bewirkt die Energieabsorptionskammer im Falle eines Pfahl- bzw. Barrierenaufpralles eine den Fahrzeuginsassen wirkungsvoll schützende Energieabsorption. Im Falle eines Fahrzeugüberschlags gewährleistet die Stützkammer, dass der Airbag während des gesamten Überschlagsvorganges aufgeblasen bleibt, da er - im Vergleich zur Energieabsorptionskammer - relativ gasundurchlässig ist; die Wahrscheinlichkeit eines Herausschleuderns eines Fahrzeuginsassen oder von Gliedmaßen eines Fahrzeuginsassen wird dadurch vermindert.

Im Hinblick auf die bereits angesprochenen Fahrzeugüberschläge wird es als vorteilhaft angesehen, wenn die Gassackhülle der Stützkammer derart gasdicht ausgeführt ist, dass eine Stützwirkung für eine Zeitdauer von mindestens 2 Sekunden, vorzugsweise von mindestens 5 Sekunden, erreicht wird. Erfahrungsgemäß sind Fahrzeugüberschläge innerhalb einer Zeitdauer von 5 Sekunden abgeschlossen.

Eine besonders gute Stützwirkung erreichen die Stützkammern dann, wenn diese derart bemessen sind, dass sie sich nach dem Entfalten zusätzlich am Dachrahmen des Fahrzeugs abstützen.

Die Energieabsorptionskammer kann beispielsweise zwischen den beiden säulenförmigen Stützkammern gehalten werden; beispielsweise kann die Energieabsorptionskammer in der durch die Stützkammern aufgespannten Stützfläche liegen.

Ebenfalls bevorzugt kann die zumindest eine Stützkammer eine flächige Kammer sein, die in Fahrzeugquerrichtung (y-Richtung) durch zumindest ein Spannband zusammengehalten wird. Unter einer solchen flächigen Kammer ist beispielsweise eine Kammer zu verstehen, die in den beiden Raumrichtungen senkrecht zur Fahrzeugquerrichtung größer als in Fahrzeugquerrichtung ist.

Alternativ kann der Airbag zwei oder mehr Absorptionskammem aufweisen, die beiderseits der Stützfläche liegen; zumindest eine der Energieabsorptionskammern ist erfindungsgemäß auf der dem zu schützenden Fahrzeuginsassen zugewandten Seite der Stützfläche angeordnet und zumindest eine weitere Energieabsorptionskammer kann auf der dem zu schützenden Fahrzeuginsassen abgewandten Seite der Stützfläche angeordnet sein.

Gemäß einer besonders bevorzugten Ausgestaltung des Airbags ist vorgesehen, dass zumindest zwei säulenförmige Stützkammern eine äußere, dem Fahrzeuginsassen abgewandte Stützfläche und zumindest zwei säulenförmige Stützkammern eine innere, dem Fahrzeuginsassen zugewandte Stützfläche aufspannen, wobei die beiden Stützflächen parallel, zumindest im Wesentlichen parallel, zur zugeordneten Außenfläche der Fahrzeugaußenhaut liegen und wobei die Energieabsorptionskammer zwischen den beiden Stützflächen entfaltet wird.

Besonders einfach und damit vorteilhaft lässt sich der Airbag durch zwei Materiallagen bilden, die unmittelbar miteinander verbunden sind. Die beiden verbundenen Materiallagen werden entlang einer Faltlinie gefaltet und derart aufeinander geklappt, dass die zweite Materiallage innen liegt. Die beiden aufeinander liegenden Abschnitte der geklappten Materiallagen werden im Bereich ihrer äußeren Kontur miteinander verbunden. Die Energieabsorptionskammer wird dann durch den Raum zwischen den Abschnitten der innen liegenden zweiten Materiallage und die beiden Stützkammern jeweils durch den Raum zwischen der ersten und der zweiten Materiallage gebildet.

Um zu erreichen, dass die beiden Stützkammern gasundurchlässig sind, werden für die erste Materiallage und für die zweite Materiallage jeweils gasdichte Materialien verwendet. Beispielsweise können die beiden Materiallagen in Jaquard-Webtechnik hergestellt und anschließend durch eine Beschichtung abgedichtet sein.

Die erste und die zweite Materiallage sind außerdem vorzugsweise gasdicht miteinander verbunden, um die Gasdichtigkeit der beiden Stützkammern sicherzustellen. Beispielsweise können die erste und die zweite Materiallage zunächst miteinander verklebt und nachfolgend im Bereich der Klebeverbindungen miteinander vernäht werden, um die Stabilität der Verbindung zu erhöhen.

Um zu erreichen, dass die durch die innen liegenden Abschnitte der zweiten Materiallage gebildete Energieabsorptionskammer gasdurchlässiger als die beiden Stützkammern ist, werden die beiden aufeinander liegenden Abschnitte der aufeinander geklappten Materiallagen entlang ihrer äußeren Kontur miteinander bevorzugt durch eine gasdurchlässige Naht verbunden. Wird statt einer gasdurchlässigen Naht eine gasdichte Verbindung gewählt, so können Abströmöffnungen (Ventholes) vorgesehen werden, um die Gasdurchlässigkeit der Energieabsorptionskammer zu erreichen. Selbstverständlich können auch bei Verwendung gasdurchlässiger Nähte zusätzlich Abströmöffnungen (Ventholes) vorgesehen werden.

Die beiden Materiallagen können beispielsweise entlang einer Symmetrieachse einer der beiden bzw. beider Materiallagen aufeinander gefaltet werden. Bei einer symmetrischen Faltung wird erreicht, dass die beiden Stützkammern im Wesentlichen gleich groß sind und sich relativ geradlinig entfalten. Alternativ können die beiden Materiallagen auch asymmetrisch derart aufeinander gefaltet sein, dass die beiden Stützkammern unterschiedlich sind und sich nach dem Entfalten des Airbags in Richtung zum Fahrzeuginsassen neigen.

Um die seitliche Stabilität der Stützkammern zu erhöhen, wird vorzugsweise auf der dem zu schützenden Fahrzeuginsassen zugewandten Seite der Stützkammer und/oder auf der dem zu schützenden Fahrzeuginsassen abgewandten Seite der Stützkammer eine weitere Zusatzstützkammer angeordnet, die sich im entfalteten Zustand auf der Türbrüstung der Fahrzeugtür abstützt und die Position der sich nach oben entfalteten säulenförmigen Stützkammer(n) seitlich abstützt.

Um zu erreichen, dass die Energieabsorptionskammer in der ersten Unfallphase möglichst viel Energie aufnehmen kann, weist die Energieabsorptionskammer vorzugsweise mindestens eine Gasauslassöffnung auf, durch die Gas aus der Energieabsorptionskammer austreten kann. Durch diesen Gasaustritt wird erreicht, dass die Energieabsorptionskammer zusammengedrückt werden kann, wodurch Energie absorbiert wird.

Die Gasauslassöffnung der Energieabsorptionskammer kann Gas unmittelbar nach außen, d.h. aus dem Airbag heraus, austreten lassen. Alternativ kann die Gasauslassöffnung derart angeordnet sein, dass das Gas aus Energieabsorptionskammer in eine andere Kammer des Airbags, beispielsweise in eine Stützkammer fließt. Die Gasauslassöffnung bildet in diesem Falle somit eine "Überströmöffnung".

Um zu vermeiden, dass ein "rückgerichteter" Gasstrom von der Stützkammer in die Energieabsorptionskammer auftreten kann, ist die Gasauslassöffnung bzw. die Überströmöffnung vorzugsweise mit einem Einwegventil versehen, das einen Gasstrom aus der Energieabsorptionskammer heraus ermöglicht, jedoch ein Überströmen von Gas in entgegen gesetzter Richtung unterbindet.

Um sicherzustellen, dass sich die Energieabsorptionskammer stets so entfaltet, dass ein optimaler Schutz des Fahrzeuginsassen erreicht wird, weist diese vorzugsweise zumindest ein Fangband auf, das die Form der entfalteten Energieabsorptionskammer optimal beeinflusst.

Die Erfindung wird nachfolgend anhand von Ausführungsbeispielen näher erläutert. Dabei zeigen
- Figuren 1 bis 3: ein erstes Ausführungsbeispiel für einen erfindungsgemäßen Gassack,
- Figuren 4 und 5: beispielhaft ein Herstellungsverfahren zur Herstellung des Airbags gemäß Figur 1,
- Figur 6 und 7: ein zweites Ausführungsbeispiel eines erfindungsgemäßen Airbags,
- Figur 8: ein drittes Ausführungsbeispiel für einen erfindungsgemäßen Airbag,
- Figuren 9 und 10: ein viertes Ausführungsbeispiel für einen erfindungsgemäßen Airbag,
- Figur 11: ein fünftes Ausführungsbeispiel eines erfindungsgemäßen Airbags,
- Figuren 12 und 13: ein sechstes Ausführungsbeispiel eines nicht erfindungsgemäßen Airbags,
- Figur 14: ein siebentes Ausführungsbeispiel eines nicht erfindungsgemäßen Airbags,
- Figur 15: ein achtes Ausführungsbeispiel eines nicht erfindungsgemäßen Airbags und
- Figur 16: ein neuntes Ausführungsbeispiel eines nicht erfindungsgemäßen Airbags.

In den Figuren werden für identische oder vergleichbare Komponenten dieselben Bezugszeichen verwendet.

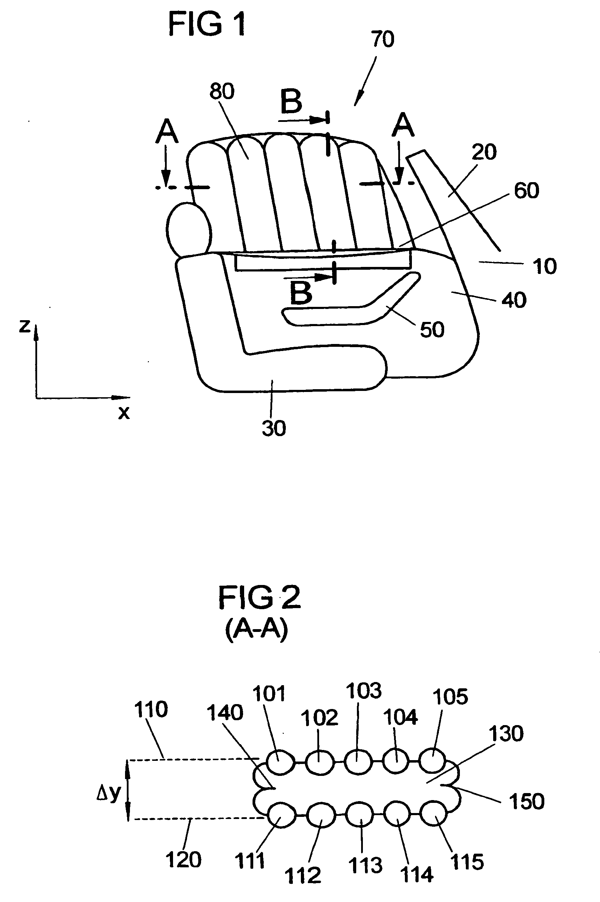

Figur 1 zeigt in einer Seitensicht ein Cabriot 10 mit einer Frontscheibe 20, einem Fahrzeugsitz 30 sowie einer Fahrzeugtür 40, die mit einem Türgriff 50 ausgestattet ist. Im Bereich einer Oberkante 60 einer Türbrüstung der Fahrzeugtür 40 ist eine Insassenschutzeinrichtung 70 montiert, die einen Airbag 80 aufweist. Die Figur 1 zeigt den Airbag 80 im entfalteten Zustand, also nach Eintritt eines Unfalls. Der Airbag 80 wird durch einen oder mehrere in der Figur 1 nicht dargestellte Gasgeneratoren der Insassenschutzeinrichtung 70 aufgeblasen.

Man erkennt in der Figur 1, dass der Airbag 80 säulenartige Kammern bzw. Abschnitte aufweist. Der nähere Aufbau des Airbags 80 ist in der Figur 2 näher dargestellt. Die Figur 2 zeigt den Airbag 80 in einem Querschnitt entlang der Schnittlinie AA gemäß der Figur 1 in einer Sicht von oben. Man erkennt, dass der Airbag 80 fünf im Querschnitt kreisförmige Stützkammern 101, 102, 103, 104 und 105 aufweist, die in einer Ebene 110 angeordnet sind. Die Ebene 110 bildet somit eine Art Stützebene bzw. Stützfläche, die durch die fünf Stützkammern 101 bis 105 aufgespannt wird.

In der Figur 2 erkennt man darüber hinaus weitere fünf Stützkammern 111 bis 115, die eine weitere Stützebene bzw. Stützfläche 120 aufspannen. Die beiden Stützflächen 110 und 120 liegen im Wesentlichen parallel zueinander und weisen einen Abstand Δy auf. Die insgesamt zehn Stützkammern 101 bis 105 bzw. 110 bis 115 sind jeweils gasdicht, zumindest annähernd gasdicht ausgestaltet, so dass diese Stützkammern ihren Gasdruck während einer Zeitspanne von mindestens 2 Sekunden, vorzugsweise von über 5 Sekunden, aufrechterhalten können.

Zwischen den beiden Stützebenen 110 und 120 befindet sich eine Energieabsorptionskammer 130. Die Energieabsorptionskammer 130 wird durch die Stützkammern 101 bis 105 bzw. 111 bis 115 gehalten. Die Energieabsorptionskammer ist im Gegensatz zu den zehn Stützkammern gasdurchlässig ausgeführt. Die Gasdurchlässigkeit kann beispielsweise dadurch bewirkt werden, dass die seitlichen Nähte 140 und 150 der Energieabsorptionskammer 130 gasdurchlässig sind. Zusätzlich kann die Hülle der Energieabsorptionskammer 130 zusätzliche Gasauslassöffnungen aufweisen, durch die das Gas aus der Energieabsorptionskammer 130 nach außen strömen kann. Alternativ oder zusätzlich kann die Energieabsorptionskammer 130 Überströmöffnungen aufweisen, die einen Gasstrom von der Energieabsorptionskammer 130 zu einzelnen oder zu allen der Stützkammern 101 bis 105 bzw. 111 bis 115 erlauben. Um einen Gasstrom in entgegen gesetzter Richtung, also von den Stützkammern zur Energieabsorptionskammer 130 zu vermeiden, sind derartige Überströmöffnungen bevorzugt mit Einwegventilen versehen, die lediglich einen Gasstrom aus der Energieabsorptionskammer heraus, jedoch nicht in umgekehrter Richtung ermöglichen.

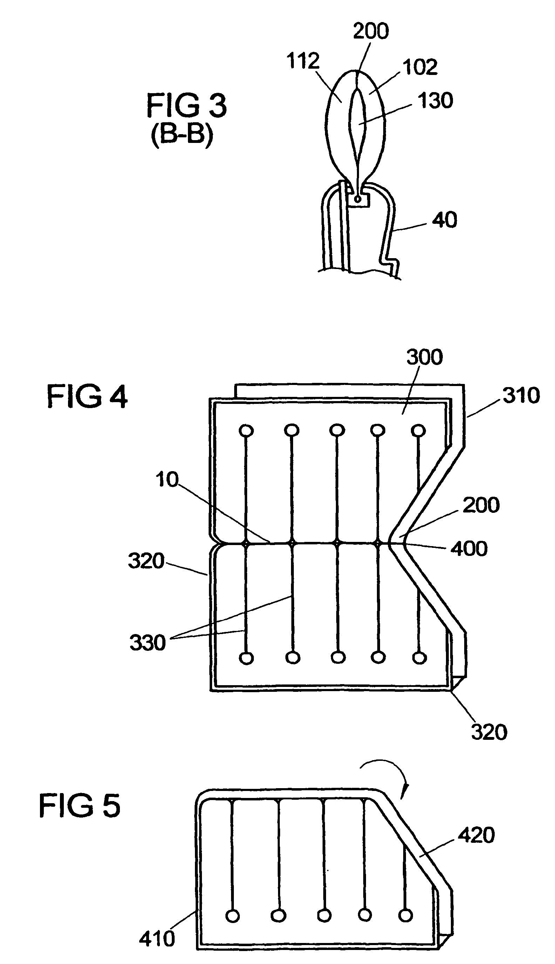

Der Airbag 80 ist in einem Längsschnitt entlang der Schnittebene BB (vgl. Figur 1) nochmals in der Figur 3 dargestellt. Man erkennt die Stützkammer 102, die dem Fahrzeuginsassen bzw. dem Fahrzeuginneren zugewandt ist, sowie die der Stützkammer 102 gegenüberliegende Stützkammer 112, die der Fahrzeugaußenseite zugewandt ist. Darüber hinaus erkennt man, dass zwischen den beiden Stützkammern 102 und 112 die Energieabsorptionskammer 130 angeordnet ist. Die beiden Stützkammern 102 und 112 sind durch eine obere Verbindungsnaht 200 miteinander verbunden.

In den Figuren 4 und 5 ist dargestellt, wie der Airbag 80 gemäß den Figuren 1 bis 3 hergestellt werden kann. Man erkennt eine erste Materiallage 300 sowie eine zweite Materiallage 310, die jeweils aus gasdichtem Material bestehen und entlang ihrer äußeren Kontur miteinander gasdicht verbunden sind. Beispielsweise sind die beiden Materiallagen 300 und 310 miteinander verklebt, wobei die Klebestellen zusätzlich noch durch Nähte verstärkt sind. Die Kontur-Verbindungsnähte zwischen den beiden Materiallagen 300 und 310 sind in der Figur 3 mit dem Bezugszeichen 320 gekennzeichnet. Außerdem ist die ebenfalls gasdichte obere Verbindungsnaht 200 eingezeichnet, die die beiden Materiallagen 300 und 310 miteinander verbindet.

In der Figur 3 sind darüber hinaus weitere Nähte 330 erkennbar, die die beiden Materiallagen 300 und 310 untereinander verbinden. Durch diese weiteren Nähte 330 wird eine Segmentierung des Airbags 80 hervorgerufen, wodurch die bereits erläuterten säulenförmigen Stützkammern 101 bis 105 bzw. 110 bis 115 gemäß Figur 2 gebildet werden.

Entlang einer Symmetrieachse 400 der beiden Materiallagen 300 und 310 werden die beiden miteinander vernähten Materiallagen 300 und 310 aufeinander gefaltet bzw. aufeinander geklappt. Dies zeigt die Figur 5 im Detail. Die durch das Klappen aufeinander liegenden äußeren Kanten 410 und 420 der miteinander vernähten Materiallagen 300 und 310 werden ebenfalls miteinander vernäht, und zwar mit den bereits erwähnten seitlichen Nähten 140 und 150 gemäß der Figur 2. Die Nähte 140 und 150 sind gasdurchlässig, wodurch gewährleistet wird, dass die Energieabsorptionskammer 130 gasdurchlässig ist und Gas aus der Energieabsorptionskammer nach außen austreten kann.

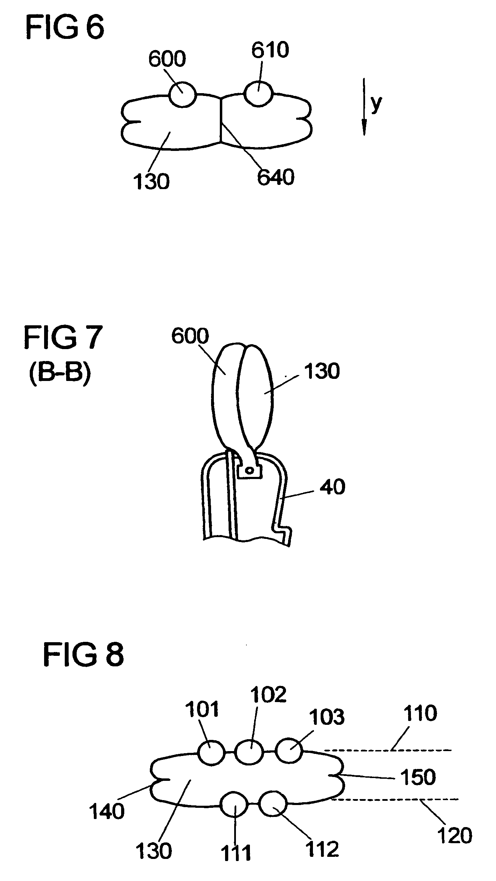

In der Figur 6 ist ein zweites Ausführungsbeispiel für einen erfindungsgemäßen Airbag 80 gezeigt. In der Figur 6 ist der Airbag 80 in einem Schnitt entlang der Schnittlinie A-A gemäß Figur 1 gezeigt. Man erkennt, dass der Airbag 80 insgesamt zwei Stützkammern 600 und 610 aufweist, die eine Stützebene aufspannen. Mit den beiden Stützkammern 600 und 610 steht eine Absorptionskammer 130 in Verbindung. Die Absorptionskammer 130 wird durch die beiden Stützkammern 600 und 610 positioniert. Da die beiden Stützkammern 600 und 610 gasundurchlässig ausgeführt sind und somit relativ lange ihren Gasdruck halten, bleibt die Absorptionskammer 130 auch dann noch positioniert, wenn sie ihren Gasdruck schon weitgehend verloren hat. Aufgrund ihrer Positionierung behält die Absorptionskammer 130 auch nach dem Verlust ihres Gasdrucks noch eine gewisse Schutzwirkung, da sie als eine Art "Schutzsegel" bzw. "Materialsegel" die beiden Stützkammern 600 und 610 miteinander verbindet und ein Herausfallen von Gegenständen und/oder Körperteilen des Fahrzeuginsassen aus dem Fahrzeug heraus verhindert.

In der Figur 6 erkennt man darüber hinaus ein Fangband 640, das die Formgebung der Absorptionskammer 130 beeinflusst; konkret wird durch Fangband 640 verhindert, dass sich die Absorptionskammer 620 in Fahrzeug Y-Richtung zu sehr ausdehnt bzw. "zu dick" wird.

Das zweite Ausführungsbeispiel gemäß Figur 6 ist in Figur 7 außerdem in einem seitlichen Schnitt gemäß der Schnittlinie B-B nach Figur 1 dargestellt. Man erkennt, dass die Absorptionskammer 130 dem Fahrzeuginsassen bzw. dem Fahrzeuginneren zugewandt ist, wohingegen die Stützkammer 600 auf der Fahrzeugaußenseite bzw. der dem Fahrzeuginsassen abgewandten Seite angeordnet ist.

In der Figur 8 ist ein drittes Ausführungsbeispiel für einen erfindungsgemäßen Airbag gezeigt. Man erkennt, dass in der Stützebene 110 drei Stützkammern 101, 102 und 103 angeordnet sind; in der Stützebene 120 sind lediglich zwei Stützkammern 111 und 112 angeordnet. Zwischen den beiden Stützebenen bzw. Stützflächen 110 und 120 befindet sich wiederum die Energieabsorptionskammer 130; man erkennt die Nähte 140 und 150, die gasdurchlässig ausgestaltet sind und einen Gasfluss nach außen ermöglichen.

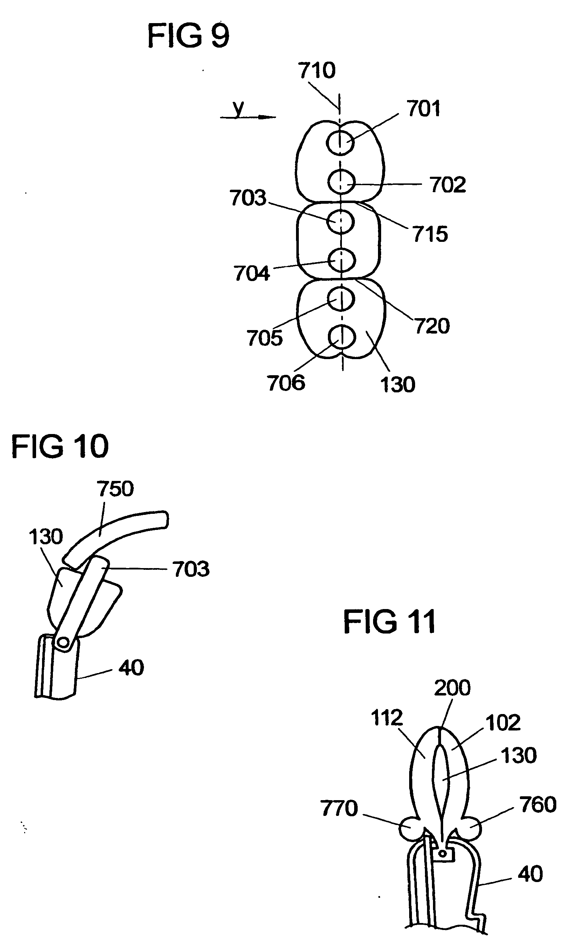

In der Figur 9 erkennt man ein viertes Ausführungsbeispiel eines erfindungsgemäßen Airbags. Bei diesem vierten Ausführungsbeispiel liegen insgesamt sechs Stützkammern 701 bis 706 in einer Ebene bzw. einer "Stützfläche", die mit dem Bezugszeichen 710 gekennzeichnet ist. Die sechs Stützkammern 701 bis 706 befinden sich innerhalb einer Energieabsorptionskammer 130, die mit zwei Fangbändern 715 und 720 ausgestattet ist. Die beiden Fangbänder 715 und 720 begrenzen die Ausdehnung der Absorptionskammer 130 in Fahrzeug Y-Richtung.

In der Figur 10 ist der Airbag 80 gemäß Figur 9 nochmals in einer seitlichen Sicht gezeigt. Man erkennt eine der Stützkammern 703 sowie die Energieabsorptionskammer 130, die auf beiden Seiten der durch die Stützkammern 701 bis 706 aufgespannten Stützebene 710 angeordnet ist. Darüber hinaus erkennt man, dass durch die Stützkammern 701 bis 706 eine Abstützung des Airbags 80 auch im Bereich der Fahrzeugstruktur (z. B Dachholm, B-Säule) des Fahrzeugs auftritt. Konkret stützt sich der obere Bereich der Stützkammern beispielsweise innen am Dachrahmen 750 ab, so dass der Airbag 80 zwischen der Türbrüstung 60 und dem Dachrahmen 750 gehalten wird.

In der Figur 11 erkennt man ein fünftes Ausführungsbeispiel für einen Airbag 80. Dieser Airbag 80 entspricht im Wesentlichen dem Airbag gemäß den Figuren 1 bis 3 mit dem Unterschied, dass zwei Zusatzstützkammern 760 und 770 vorhanden sind, die unmittelbar auf der Oberkante 60 der Türbrüstung der Fahrzeugtür 40 aufliegen und somit eine seitliche Stützwirkung auf die Stützkammern ausüben. Konkret verhindern die Zusatzstützkammern 760 und 770, dass der Airbag 80 zur Fahrzeuginnenseite oder zur Fahrzeugaußenseite "wegknicken" kann.

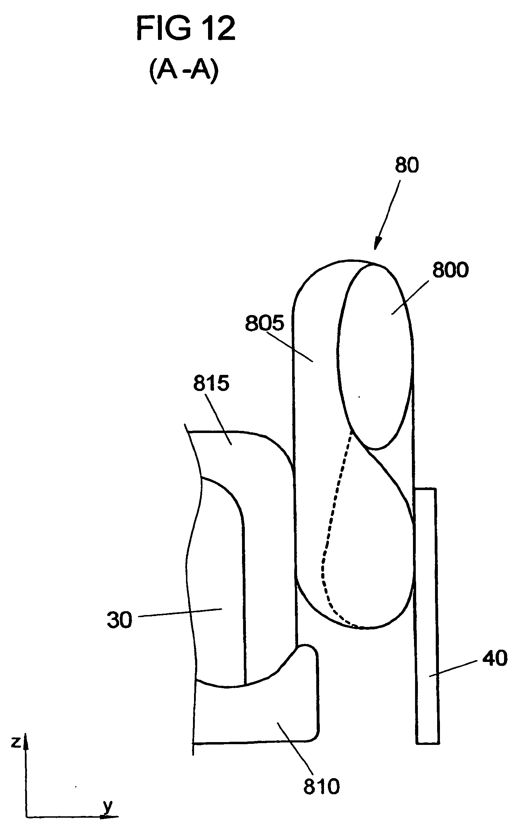

In der Figur 12 ist ein sechstes nicht zur Erfindung gehörendes Beispiel eines Airbags 80 in der Frontansicht (Sicht entgegen der Fahrtrichtung) gezeigt. Der Airbag 80 umfasst eine Stützkammer 800 sowie eine Energieabsorptionskammer 805. Außerdem erkannt man den Fahrzeugsitz 30 mit einer unteren Sitzfläche 810 und einer Sitzlehne 815.

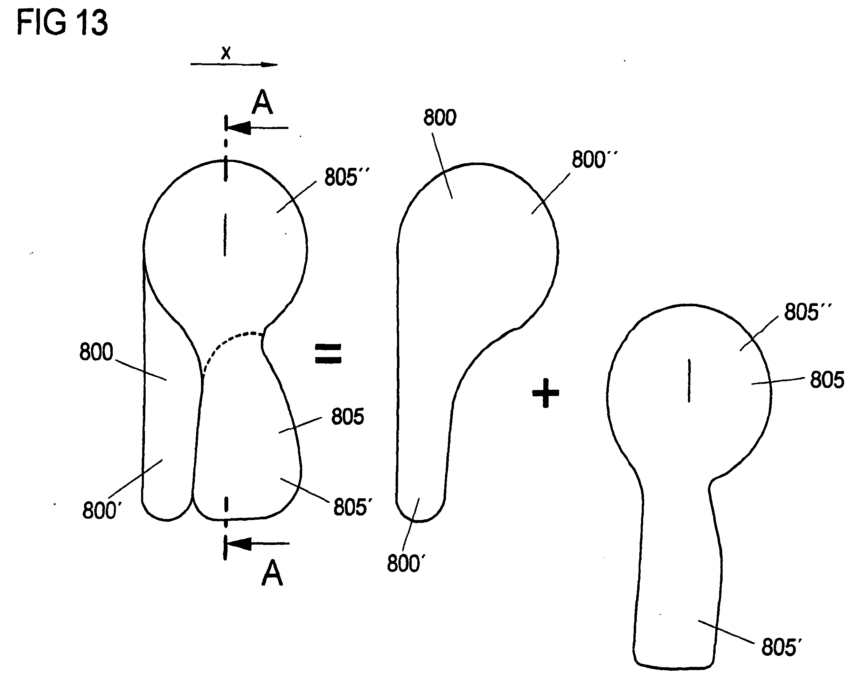

Der Aufbau des Airbags 80 ist in der Figur 13 in der Seitenansicht näher gezeigt. Man erkennt, dass die beiden Kammern in Fahrzeuglängsrichtung (x-Richtung) derart aufeinander gesetzt sind, dass der untere Bereich 800' der Stützkammer 80 zwischen der Sitzlehne 815 und der Tür 40 angeordnet ist und der untere Bereich 805' der Energieabsorptionskammer 805 in Fahrtrichtung davor liegt und so den Thoraxbereich des Fahrzeuginsassen schützt. Die oberen Bereiche 800" und 805" der beiden Kammern liegen in y-Richtung hintereinander, so dass der Kopf des Fahrzeuginsassen auf den oberen Bereich 805" der Energieabsorptionskammer 805 stößt, deren Lage durch den dahinter liegenden oberen Bereich 800" der Stützkammer 800 gestützt wird.

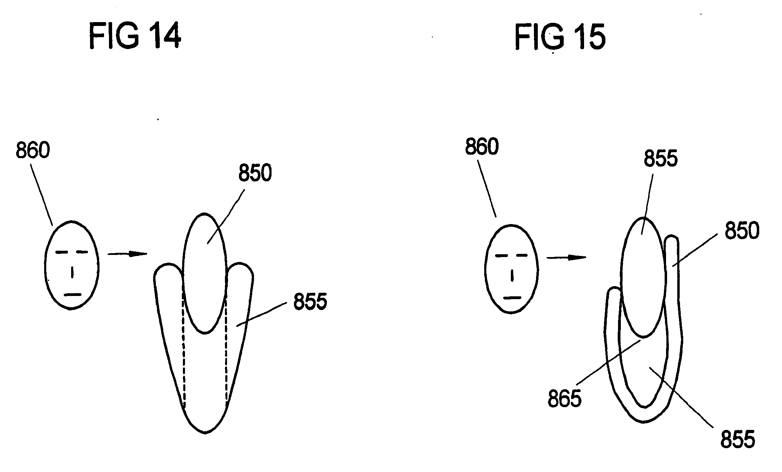

In der Figur 14 ist ein siebentes nicht zur Erfindung gehörendes Beispiel eines Airbags 80 im Querschnitt (Frontansicht) gezeigt. Man erkennt, dass die Stützkammer 850 im Zwickelbereich einer im Querschnitt annäherungsweise Y- oder V-förmigen Energieabsorptionskammer 855 angeordnet ist. Außerdem erkannt man anhand eines Pfeiles, wie der Kopf 860 des Insassen in den Airbag 80 im Unfallfall eintaucht.

In der Figur 15 ist ein achtes nicht zur Erfindung gehörendes Beispiel eines Airbags 80 im Querschnitt (Frontansicht) gezeigt. Man erkennt, dass die Stützkammer 850 im Querschnitt annäherungsweise J-förmig ausgestaltet ist und die mit einem Fangband 865 zusammengehaltene Energieabsorptionskammer 855 teilweise umfasst.

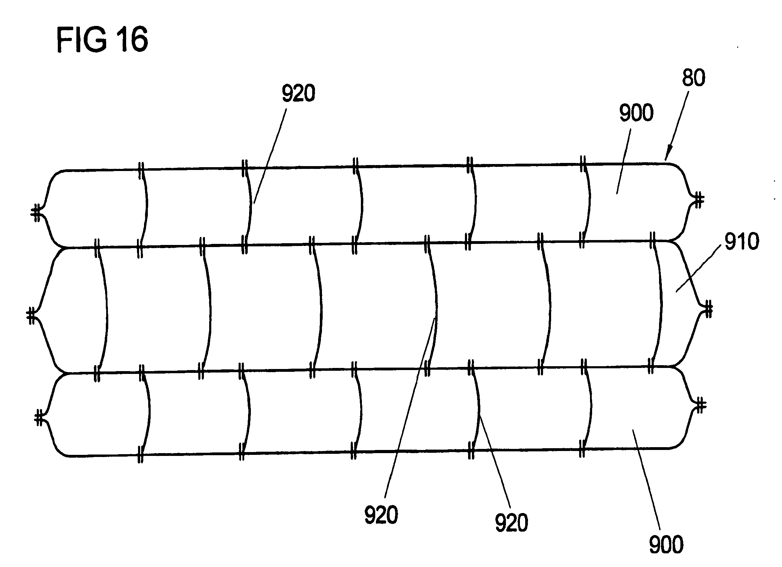

In der Figur 16 ist ein neuntes nicht zur Erfindung gehörendes Beispiel eines Airbags 80 in der Seitenansicht gezeigt. Man erkennt, dass zwei Stützkammern 900 eine Energieabsorptionskammer 910 umgeben. Alle Kammern sind jeweils "flächig" ausgeführt und werden in Fahrzeugquerrichtung durch Fangbänder 920 zusammengehalten.

Bei den Airbags gemäß den Figuren 1 bis 16 ist es unwichtig, in welcher Reihenfolge die einzelnen Airbagkammern aufgeblasen werden: Beispielsweise können die Stützkammern zuerst und die Absorptionskammern anschließend aufgeblasen werden; alternativ kann die Reihenfolge auch umgekehrt sein, oder das Aufblasen kann gleichzeitig erfolgen. Vorzugsweise werden die Stützkammern und die Absorptionskammern mit separaten Gasgeneratoren gefüllt.

### Bezugszeichenliste

- 10: Fahrzeug
- 20: Frontscheibe
- 30: Fahrzeugsitz
- 40: Fahrzeugtür
- 50: Türgriff
- 60: Türbrüstung
- 70: Insassenschutzeinrichtung
- 80: Airbag
- 101 - 105: Stützkammern
- 110: Stützebene
- 111 - 115: Stützkammern
- 120: Stützebene
- 130: Energieabsorptionskammer
- 140,150: Nähte
- 300: erste Materiallage
- 310: zweite Materiallage
- 320: Kontur-Naht
- 330: weitere Nähte
- 400: Faltkante
- 410, 420: äußere Naht
- 600,610: Stützkammer
- 640: Fangband
- 701 - 706: Stützkammern
- 710: Stützebene
- 715,720: Fangbänder
- 750: Fahrzeugstruktur
- 760,770: Zusatzstützkammern
- 800: Stützkammer
- 805: Energieabsorptionskammer
- 810: Sitzfläche
- 815: Sitzlehne
- 850: Stützkammer
- 855: Energieabsorptionskammer
- 860: Kopf
- 900: Stützkammer
- 910: Energieabsorptionskammer
- 920: Fangbänder

## Patentansprüche

1. Fahrzeuginsassenschutzeinrichtung (70) zum Schutz eines Fahrzeuginsassen im Unfallfall mit einem im Türbereich eines Fahrzeuges montierten Seitenairbag (80), der zumindest zwei Stützkammern (101-105, 111-115) aufweist, die sich parallel, zumindest im Wesentlichen parallel, säulenförmig nach oben entfalten und die dem Airbag (80) im aufgeblasenen Zustand mechanische Stabilität geben, und der zumindest eine Energieabsorptionskammer (130) aufweist, die gasdurchlässiger als die Stützkammern (101-105, 111-115) ausgeführt ist und in einer ersten Unfallphase mehr Energie als die Stützkammern absorbiert,
wobei die beiden Stützkammern (101-105, 111-115) in Fahrzeuglängsrichtung beabstandet angeordnet sind, und
wobei die durch die beiden Stützkammern aufgespannte Stützfläche (110, 120) parallel, zumindest im Wesentlichen parallel zur zugeordneten Außenfläche der Fahrzeugaußenhaut liegt,
**dadurch gekennzeichnet,**
**dass** die mindestens eine Energieabsorptionskammer und die mindestens zwei Stützkammern in Fahrzeugquerrichtung (y) wenigstens abschnittsweise hintereinander angeordnet sind, und
**dass** die mindestens eine Energieabsorptionskammer (130) auf der dem zu schützenden Fahrzeuginsassen zugewandeten Seite der Stützfläche angeordnet ist.

2. Fahrzeuginsassenschutzeinrichtung nach Anspruch 1, **dadurch gekennzeichnet, dass** der Airbag (80) ein Kopf-Seitenairbag ist.

3. Fahrzeuginsassenschutzeinrichtung nach Anspruch 1 oder 2, **dadurch gekennzeichnet, dass** die Gassackhülle der Stützkammern (101-105, 111-115) derart gasdicht ausgeführt ist, dass eine Stützwirkung für eine Zeitdauer von mindestens 2 Sekunden, vorzugsweise von mindestens 5 Sekunden erreicht wird.

4. Fahrzeuginsassenschutzeinrichtung nach Anspruch 1, **dadurch gekennzeichnet, dass** der Airbag im Bereich der Oberkante einer Türbrüstung (60) der Fahrzeugtür (40) montiert ist.

5. Fahrzeuginsassenschutzeinrichtung nach einem der vorhergehenden Ansprüche, **dadurch gekennzeichnet, dass** die zumindest zwei Stützkammern (101-105, 111-115) derart bemessen sind, dass sie sich nach dem Entfalten am Dachrahmen (750) des Fahrzeugs abstützen.

6. Fahrzeuginsassenschutzeinrichtung nach einem der voranstehenden Ansprüche, **dadurch gekennzeichnet, dass** die Energieabsorptionskammer (130) zwischen den beiden-Stützkammern (600, 610) gehalten wird.

7. Fahrzeuginsassenschutzeinrichtung nach einem der voranstehenden Ansprüche 1 bis 6, **dadurch gekennzeichnet, dass** zumindest zwei säulenförmige Stützkammern (101-105) eine äußere, dem Fahrzeuginsassen abgewandte Stützfläche (110) und zumindest zwei säulenförmige Stützkammern (111-115) eine innere, dem Fahrzeuginsassen zugewandte Stützfläche (120) aufspannen, wobei die beiden Stützflächen parallel, zumindest im Wesentlichen parallel zur zugeordneten Außenfläche der Fahrzeugaußenhaut liegen und wobei die Energieabsorptionskammer (130) zwischen den beiden Stützflächen (110, 120) entfaltet wird.

8. Fahrzeuginsassenschutzeinrichtung nach Anspruch 7, **dadurch gekennzeichnet,**
- **dass** der Airbag durch eine erste Materiallage (300) und eine zweite Materiallage (320) gebildet ist, die miteinander verbunden sind,
- **dass** die beiden verbundenen Materiallagen entlang einer Faltlinie (400) gefaltet und derart aufeinander geklappt sind, dass die erste Materiallage (300) außen und die zweite Materiallage (310) innen liegt,
- **dass** die beiden aufeinander liegenden Abschnitte des derart zusammengeklappten Hüllenpakets im Bereich der äußeren Kontur (410, 420) des Hüllenpakets miteinander verbunden sind,
- wobei die Energieabsorptionskammer (130) durch die einander gegenüberliegenden Abschnitte der innen liegenden zweiten Materiallage (310) begrenzt ist und die beiden Stützkammern durch die einander gegenüberliegenden Abschnitte der ersten und der zweiten Materiallage begrenzt sind.

9. Fahzeuginsassenschutzeinrichtung nach Anspruch 8, **dadurch gekennzeichnet, dass** die erste Materiallage und die zweite Materiallage miteinander verklebt sind.

10. Fahrzeuginsassenschutzeinrichtung nach Anspruch 9, **dadurch gekennzeichnet, dass** die erste Materiallage und die zweite Materiallage im Bereich der Klebeverbindungen miteinander vernäht sind.

11. Fahrzeuginsassenschutzeinrichtung nach einem der voranstehenden Ansprüche 8 bis 10, **dadurch gekennzeichnet, dass** die erste Materiallage und die zweite Materiallage aus gasdichtem Material bestehen.

12. Fahrzeuginsassenschutzeinrichtung nach Anspnrch 8, **dadurch gekennzeichnet, dass** die erste Materiallage und die zweite Materiallage in Jaquard Webtechnik hergestellt und anschließend durch Beschichtung abgedichtet sind.

13. Fahrzeuginsassenschutzeinrichtung nach einem der voranstehenden Anspruche 8 bis 12, **dadurch gekennzeichnet, dass** die beiden aufeinander liegenden Abschnitte des zusammengeklappten Hüllenpakets im Bereich der äußeren Kontur (410, 420) des Hüllenpakets miteinander durch eine gasdurchlässige Naht verbunden sind.

14. Fahrzeuginsassenschutzeinrichtung nach Anspruch 13, **dadurch gekennzeichnet, dass** im Bereich der gasdurchlässigen Naht mindestens ein Venthole vorgesehen ist.

15. Fahrzeuginsassenschutzeinrichtung nach einem der voranstehenden Ansprüche 8 bis 14, **dadurch gekennzeichnet, dass** die beiden miteinander verbundenen Materiallagen (300, 310) entlang einer Symmetrieachse (400) einer beiden Materiallagen aufeinander gefaltet sind.

16. Fahrzeuginsassenschutzeinrichtung nach einem der voranstehenden Ansprüche 8 bis 14, **dadurch gekennzeichnet, dass** die beiden miteinander verbundenen Materiallagen asymmetrisch derart aufeinander gefaltet sind, dass sich die beiden Stützflächen nach dem Entfalten des Airbags in Richtung zum Fahrzeuginsassen neigen.

17. Fahrzeuginsassenschutzeinrichtung nach einem der voranstehenden Ansprüche, **dadurch gekennzeichnet, dass** auf der dem zu schützenden Fahrzeuginsassen zugewandeten Seite der Stützkammer und/oder auf der dem zu schützenden Fahrzeuginsassen abgewandeten Seite der Stützkammer eine weitere Zusatzstützkammer (760, 770) angeordnet ist, die sich im entfalteten Zustand auf der Türbrüstung (60) der Fahrzeugtür (40) abstützt und die Position der sich nach oben entfalteten säulenförmigen Stützkammer seitlich abstützt.

18. Fahrzeuginsassenschutzeinrichtung nach einem der voranstehenden Ansprüche, **dadurch gekennzeichnet, dass** die Energieabsorptionskammer mindestens eine Gasauslassöffnung aufweist, durch die Gas die Energieabsorptionskammer verlassen kann.

19. Fahrzeuginsassenschutzeinrichtung nach Anspruch 18, **dadurch gekennzeichnet, dass** die Gasauslassöffnung derart angeordnet ist, dass das Gas durch die Gasauslassäffnung nach außen austritt.

20. Fahrzeuginsassenschutzeinrichtung nach Anspruch 18, **dadurch gekennzeichnet, dass** die Gasaustassöffnung derart angeordnet ist, dass das Gas durch die Gasauslassöffnung in eine Stützkammer fließt.

21. Fahrzeuginsassenschutzeinrichtung nach einem der voranstehenden Ansprüche 18 bis 20, **dadurch gekennzeichnet, dass** die Gasauslassöffnung mit einem Einwegventil versehen ist, dass einen Gasstrom aus der Energieabsorptionskammer heraus ermöglicht und ein Überströmen von Gas in entgegen gesetzter Richtung unterbindet.

22. Fahrzeuginsassenschutzeinrichtung nach einem der voranstehenden Ansprüche, **dadurch gekennzeichnet, dass** die Energieabsorptionskammer (130) zumindest ein Fangband (640, 715, 720) aufweist, das die Form der entfalteten Energieabsorptionskammer beeinflusst.

23. Fahrzeuginsassenschutzeinrichtung nach einem der voranstehenden Ansprüche, **dadurch gekennzeichnet, dass** zumindest eine Stützkammer (900) eine flächige Kammer ist, die in Fahrzeugquerrichtung (y-Richtung) durch zumindest ein Spannband (920) zusammengehalten wird.

24. Fahrzeuginsassenschutzeinrichtung nach einem der voranstehenden Ansprüche, **dadurch gekennzeichnet, dass** zumindest eine Stützkammer (800) und die zumindest eine Energieabsorptionskammer (805) in Fahrzeugquerrichtung gesehen unterschiedliche Querschnittsflächen aufweisen und einander zumindest teilweise unüberdeckt lassen.

## Claims

1. Vehicle occupant protection device (70) for protecting a vehicle occupant in the event of an accident with a side airbag (80) which is fitted in the door region of a vehicle which has at least two supporting chambers (101-105, 111-115) which are deployed upwards in parallel, at least essentially in parallel, in a pillar-shaped manner and which give the airbag (80) mechanical stability in the inflated state, and which has at least one energy absorption chamber (130) which is designed to be more gas permeable than the supporting chambers (101-105, 111-115) and, in a first phase of the accident, absorbs more energy than the supporting chambers,
wherein the two supporting chambers (101-105, 111-115) are arranged spaced apart in the longitudinal direction of the vehicle, and
wherein the supporting surface (110, 120) defined by the two supporting chambers lies parallel, at least essentially parallel, to the associated outer surface of the outer skin of the vehicle,
**characterized**
**in that** the at least one energy absorption chamber and the at least two supporting chambers are arranged at least in sections one behind the other in the transverse direction (y) of the vehicle and
**in that** the at least one energy absorption chamber (130) is arranged on that side of the supporting surface which faces the vehicle occupant to be protected.

2. Vehicle occupant protection device according to Claim 1, **characterized in that** the airbag (80) is a side airbag for the head.

3. Vehicle occupant protection device according to Claim 1 or 2, **characterized in that** the gas bag casing of the supporting chambers (101-105, 111-115) is of gastight design such that a supporting action for a period of time of at least 2 seconds, preferably of at least 5 seconds, is achieved.

4. Vehicle occupant protection device according to Claim 1, **characterized in that** the airbag is fitted in the region of the upper edge of a door breastwork (60) of the vehicle door (40).

5. Vehicle occupant protection device according to one of the preceding Claims , **characterized in that** the at least two supporting chambers (101-105, 111-115) are dimensioned in such a manner that, after deployment, they are supported on the roof frame (750) of the vehicle.

6. Vehicle occupant protection device according to one of the preceding claims, **characterized in that** the energy absorption chamber (130) is held between the two supporting chambers (600, 610).

7. Airbag according to one of the preceding Claims 1 to 6, **characterized in that** at least two pillar-shaped supporting chambers (101-105) define an outer supporting surface (110) facing away from the vehicle occupant and at least two pillar-shaped supporting chambers (111-115) define an inner supporting surface (120) facing the vehicle occupant, the two supporting surfaces lying parallel, at least essentially parallel, to the associated outer surface of the outer skin of the vehicle, and the energy absorption chamber (130) being deployed between the two supporting surfaces (110, 120).

8. Airbag according to Claim 7, **characterized**
- **in that** the airbag is formed by a first material layer (300) and a second material layer (320) which are connected to each other,
- **in that** the two connected material layers are folded along a fold line (400) and are folded onto each other in such a manner that the first material layer (300) lies on the outside and the second material layer (310) lies on the inside,
- **in that** the two sections lying on each other of the casing package folded together in such a manner are connected to each other in the region of the outer contour (410, 420) of the casing package,
- the energy absorption chamber (130) being bounded by the mutually opposite sections of the second material layer (310) lying on the inside, and the two supporting chambers being bounded by the mutually opposite sections of the first and second material layers.

9. Vehicle occupant protection device according to Claim 8, **characterized in that** the first material layer and the second material layer are adhesively bonded to each other.

10. Vehicle occupant protection device according to Claim 9, **characterized in that** the first material layer and the second material layer are sewn together in the region of the adhesive connections.

11. Vehicle occupant protection device according to one of the preceding Claims 8 to 10, **characterized in that** the first material layer and the second material layer are composed of gastight material.

12. Vehicle occupant protection device according to Claim 8, **characterized in that** the first material layer and the second material layer are produced by a Jacquard weaving technique and are subsequently sealed by coating.

13. Vehicle occupant protection device according to one of the preceding Claims 8 to 12, **characterized in that** the two sections lying on each other of the folded-together casing package are connected to each other in the region of the outer contour (410, 420) of the casing package by a gas-permeable seam.

14. Vehicle occupant protection device according to Claim 13, **characterized in that** at least one vent hole is provided in the region of the gas-permeable seam.

15. Vehicle occupant protection device according to one of the preceding Claims 8 to 14, **characterized in that** the two material layers (300, 310) connected to each other are folded onto each other along an axis of symmetry (400) of one of the two material layers.

16. Vehicle occupant protection device according to one of the preceding Claims 8 to 14, **characterized in that** the two material layers connected to each other are folded asymmetrically onto each other in such a manner that, after deployment of the airbag, the two supporting surfaces are inclined in the direction of the vehicle occupant.

17. Vehicle occupant protection device according to one of the preceding claims, **characterized in that** a further additional supporting chamber (760, 770) is arranged on that side of the supporting chamber which faces the vehicle occupant to be protected and/or on that side of the supporting chamber which faces away from the vehicle occupant to be protected, which additional supporting chamber, in the deployed state, is supported on the door breastwork (60) of the vehicle door (40) and laterally supports the position of the upwardly deployed, pillar-shaped supporting chamber.

18. Vehicle occupant protection device according to one of the preceding claims, **characterized in that** the energy absorption chamber has at least one gas outlet opening through which gas can leave the energy absorption chamber.

19. Vehicle occupant protection device according to Claim 18, **characterized in that** the gas outlet opening is arranged in such a manner that the gas exits to the outside through the gas outlet opening.

20. Vehicle occupant protection device according to Claim 18, **characterized in that** the gas outlet opening is arranged in such a manner that the gas flows through the gas outlet opening into a supporting chamber.

21. Vehicle occupant protection device according to one of the preceding Claims 18 to 20, **characterized in that** the gas outlet opening is provided with a one-way valve which permits a gas flow out of the energy absorption chamber and prevents gas from overflowing in the opposite direction.

22. Vehicle occupant protection device according to one of the preceding claims, **characterized in that** the energy absorption chamber (130) has at least one intercepting strap (640, 715, 720) which influences the shape of the deployed energy absorption chamber.

23. Vehicle occupant protection device according to one of the preceding claims, **characterized in that** at least one supporting chamber (900) is a planar chamber which is held together in the transverse direction of the vehicle (y direction) by at least one clamping strap (920).

24. Vehicle occupant protection device according to one of the preceding claims, **characterized in that** at least one supporting chamber (800) and the at least one energy absorption chamber (805) have different cross-sectional areas, as seen in the transverse direction of the vehicle, and leave each other at least partially uncovered.

## Revendications

1. Système de protection pour occupant d'un véhicule (70) destiné à protéger un occupant d'un véhicule en cas d'accident, comprenant un airbag latéral (80) monté dans la région de la porte d'un véhicule, lequel comprend au moins deux chambres de soutien (101-105, 111-115) qui se déploient parallèlement ou au moins sensiblement parallèlement vers le haut à la manière de colonnes et qui confèrent à l'airbag (80) une stabilité mécanique à l'état gonflé, et comprenant au moins une chambre d'absorption d'énergie (130) qui est réalisée de manière plus perméable aux gaz que les chambres de soutien (101-105, 111-115) et qui absorbe pendant une première phase d'un accident plus d'énergie que les chambres de soutien,
dans lequel les deux chambres de soutien (101-105, 111-115) sont agencées écartées dans la direction longitudinale du véhicule, et
dans lequel la surface de soutien (110, 120) définie par les deux chambres de soutien est disposée parallèlement ou au moins sensiblement parallèlement à la surface extérieure associée de la carrosserie extérieure du véhicule,
**caractérisé en ce que**
ladite au moins une chambre d'absorption d'énergie et lesdites au moins deux chambres de soutien sont agencées au moins par portion les unes derrière les autres en direction transversale (y) du véhicule, et
**en ce que** ladite au moins une chambre d'absorption d'énergie (130) est agencée sur le côté, tourné vers l'occupant du véhicule à protéger, de la surface de soutien.

2. Système de protection pour occupant d'un véhicule selon la revendication 1, **caractérisé en ce que** l'airbag (80) est un airbag latéral pour protection de la tête.

3. Système de protection pour occupant d'un véhicule selon la revendication 1 ou 2, **caractérisé en ce que** l'enveloppe des coussins gonflables des chambres de soutien (101-105, 111-115) est réalisée étanche aux gaz de telle façon que l'on obtient un effet de soutien pour une durée d'au moins deux secondes, de préférence d'au moins cinq secondes.

4. Système de protection pour occupant d'un véhicule selon la revendication 1, **caractérisé en ce que** l'airbag est monté dans la région du bord supérieur d'un panneau de portière (60) de la porte (40) du véhicule.

5. Système de protection pour occupant d'un véhicule selon l'une des revendications précédentes, **caractérisé en ce que** lesdites au moins deux chambres de soutien (101-105, 111-115) ont des dimensions choisies de telle manière qu'après le déploiement elles s'appuient sur le cadre de toiture (750) du véhicule.

6. Système de protection pour occupant d'un véhicule selon l'une des revendications précédentes, **caractérisé en ce que** la chambre d'absorption d'énergie (130) est tenue entre les deux chambres de soutien (600, 610).

7. Système de protection pour occupant d'un véhicule selon l'une des revendications précédentes 1 à 6, **caractérisé en ce qu'**au moins deux chambres de soutien (101-105) en forme de colonnes couvrent une surface de soutien extérieure (110) tournée vers l'occupant du véhicule, et au moins deux chambres de soutien (111-115) en forme de colonnes couvrent une surface de soutien intérieure (120) tournée vers l'occupant du véhicule, dans lequel les deux surfaces de soutien sont disposées parallèlement ou au moins sensiblement parallèlement à la surface extérieure associée de la carrosserie du véhicule, et dans lequel la chambre d'absorption d'énergie (130) est déployée entre les deux surfaces de soutien (110, 120).

8. Système de protection pour occupant d'un véhicule selon la revendication 7, **caractérisé en ce que**
- l'airbag est formé par une première couche de matériau (300) et par une seconde couche de matériau (320), qui sont reliées l'une à l'autre,
- les deux couches de matériau reliées sont pliées le long d'une ligne de pliage (400) et rabattues l'une sur l'autre de telle façon que la première couche de matériau (300) est à l'extérieur et la seconde couche de matériau (310) est à l'intérieur,
- les deux tronçons appliqués l'un sur l'autre de la pile d'enveloppes ainsi rabattus ensemble sont reliés l'un à l'autre dans la zone du contour extérieur (410, 420) de la pile d'enveloppes,
- la chambre d'absorption d'énergie (130) est délimitée par les tronçons mutuellement opposés de la seconde couche de matériau (310) située à l'intérieur, et les deux chambres de soutien sont délimitées par les tronçons mutuellement opposés de la première et de la seconde couche de matériau.

9. Système de protection pour occupant d'un véhicule selon la revendication 8, **caractérisé en ce que** la première couche de matériau et la seconde couche de matériau sont collées ensemble.

10. Système de protection pour occupant d'un véhicule selon la revendication 9, **caractérisé en ce que** la première couche de matériau et la seconde couche de matériau sont cousues l'une à l'autre dans la région des liaisons collées.

11. Système de protection pour occupant d'un véhicule selon l'une des revendications précédentes 8 à 10, **caractérisé en ce que** la première couche de matériau et la seconde couche de matériau sont en un matériau étanche aux gaz.

12. Système de protection pour occupant d'un véhicule selon la revendication 8, **caractérisé en ce que** la première couche de matériau et la seconde couche de matériau sont réalisées par des techniques de tissage à la Jacquard et sont ensuite étanchées par un revêtement.

13. Système de protection pour occupant d'un véhicule selon l'une des revendications précédentes 8 à 12, **caractérisé en ce que** les deux tronçons appliqués l'un sur l'autre de la pile d'enveloppes ainsi rabattus ensemble sont reliés l'un à l'autre par une couture perméable aux gaz dans la région du contour extérieur (410, 420) de la pile d'enveloppes.

14. Système de protection pour occupant d'un véhicule selon la revendication 13, **caractérisé en ce qu'**il est prévu au moins un trou d'évent dans la région de la couture perméable aux gaz.

15. Système de protection pour occupant d'un véhicule selon l'une des revendications précédentes 8 à 14, **caractérisé en ce que** les deux couches de matériau (300, 310) reliées l'une à l'autre sont pliées l'une sur l'autre le long d'un axe de symétrie (400) de l'une des deux couches de matériau.

16. Système de protection pour occupant d'un véhicule selon l'une des revendications 8 à 14, **caractérisé en ce que** les deux couches de matériau reliées l'une à l'autre sont pliées l'une sur l'autre de manière asymétrique, de telle façon que les deux surfaces de soutien s'inclinent en direction de l'occupant du véhicule après le déploiement de l'airbag.

17. Système de protection pour occupant d'un véhicule selon l'une des revendications précédentes, **caractérisé en ce que**, du côté de la chambre de soutien tourné vers l'occupant du véhicule à protéger et/ou du côté de la chambre de soutien détourné de l'occupant du véhicule à protéger, est agencée une autre chambre de soutien additionnelle (760, 770) qui, dans l'état déployé, est soutenue sur le panneau de portière (60) de la porte (40) du véhicule et qui soutient latéralement la position de la chambre de soutien en forme de colonne qui se déploie vers le haut.

18. Système de protection pour occupant d'un véhicule selon l'une des revendications précédentes, **caractérisé en ce que** la chambre d'absorption d'énergie comporte au moins une ouverture de sortie de gaz à travers laquelle du gaz peut quitter la chambre d'absorption d'énergie.

19. Système de protection pour occupant d'un véhicule selon la revendication 18, **caractérisé en ce que** l'ouverture de sortie de gaz est agencée de telle façon que le gaz sort vers l'extérieur à travers l'ouverture de sortie de gaz.

20. Système de protection pour occupant d'un véhicule selon la revendication 18, **caractérisé en ce que** l'ouverture de sortie de gaz est agencée de telle façon que le gaz s'écoule à travers l'ouverture de sortie de gaz vers une chambre de soutien.

21. Système de protection pour occupant d'un véhicule selon l'une des revendications 18 à 20, **caractérisé en ce que** l'ouverture de sortie de gaz est pourvue d'un clapet antiretour qui permet un écoulement de gaz hors de la chambre d'absorption d'énergie et qui empêche un déversement du gaz en direction opposée.

22. Système de protection pour occupant d'un véhicule selon l'une des revendications précédentes, **caractérisé en ce que** la chambre d'absorption d'énergie (130) comprend au moins une bande de retenue (640, 715, 720) qui influence la forme de la chambre d'absorption d'énergie déployée.

23. Système de protection pour occupant d'un véhicule selon l'une des revendications précédentes, **caractérisé en ce qu'**au moins une chambre de soutien (90) est une chambre aplatie qui est maintenue regroupée en direction transversale du véhicule (direction y) par au moins une bande de tensionnement (920).

24. Système de protection pour occupant d'un véhicule selon l'une des revendications précédentes, **caractérisé en ce qu'**au moins une chambre de soutien (800) et ladite au moins une chambre d'absorption d'énergie (805) présentent, vues en direction transversale du véhicule, des surfaces de section différentes et se laissent l'une et l'autre au moins partiellement non recouvertes.
